# EUROPÄISCHE PATENTSCHRIFT

(11) **EP 2 029 307 B1**
(45) Veröffentlichungstag und Bekanntmachung des Hinweises auf die Patenterteilung: **02.03.2011**
(21) Anmeldenummer: 07729289.4
(22) Anmeldetag: 19.05.2007
(51) Int. Cl.: B23K 1/008, B23K 1/08, B23K 3/08, B08B 3/12, F27B 9/02

(54) **LÖTANLAGE MIT LÖTMODULEN UND MINDESTENS EINER MOBILEN UND AUSWECHSELBAR IN EINEM LÖTMODUL EINSETZBAREN LÖTSTATION ; ENTSPRECHENDE STAND-BY STATION**
SOLDERING ARRANGEMENT COMPRISING SOLDERING MODULES AND AT LEAST ONE MOBILE AND INTERCHANGEABLE SOLDERING STATION WHICH CAN BE INSERTED INTO A SOLDERING MODULE ; CORRESPONDING STAND-BY STATION
UNITÉ DE BRASAGE COMPRENANT DES MODULES DE BRASAGE ET AU MOINS UN POSTE DE BRASAGE MOBILE ET INTERCHANGEABLE POUVANT ÊTRE INSÉRÉ DANS UN MODULE DE BRASAGE ; STATION D'ATTENTE/TRAITEMENT CORRESPONDANTE

(30) Priorität: 29.05.2006 CH 871062006; 27.11.2006 CH 19402006
(43) Veröffentlichungstag der Anmeldung: 04.03.2009
(73) Patentinhaber: Kirsten Soldering AG, 6330 Cham (CH)
(72) Erfinder: WILLENEGGER, Hans Otto, 6340 Baar (CH); GHIDOTTI, Bruno, 6331 Huenenberg (CH)
(74) Vertreter: Falk, Urs
(86) Internationale Anmeldenummer: PCT/EP2007/054845
(87) Internationale Veröffentlichungsnummer: WO 2007/137952

(56) Entgegenhaltungen:
- EP-A- 1 736 269
- US-A- 4 366 177
- US-A- 5 110 147
- US-A- 5 188 527
- US-A1- 2001 051 323

## Beschreibung

Die Erfindung betrifft eine Lötanlage gemäss dem Oberbegriff des Anspruchs 1 (siehe z.B. US 2001/51323) und eine Stand-by-Station gemäss dem Oberbegriff des Anspruchs 9 (siehe z.B. US 5188527).

Solche Lötanlagen werden zum gleichzeitigen Löten von Bauteilen verwendet, die auf einer Leiterplatte montiert sind. Es werden verschiedene Löttechnologien verwendet, die als Wellenlöten, Reflow-Löten, Dampfphasenlöten, etc. bekannt sind.

### Stand der Technik

Aus der WO 2005/107991 ist eine Lötanlage zum Wellenlöten bekannt, bei der für jede einzelne Leiterplatte ausgewählt werden kann, mit welchem Lot sie gelötet wird, ohne dass die Lötanlage dazu umgerüstet werden muss. Diese Lösung ist allerdings aus verschiedenen Gründen nicht zweckmässig.

Der Erfindung liegt die Aufgabe zugrunde, eine Lötanlage zu entwickeln, die in kürzester Zeit von einer Löttechnologie auf eine andere Löttechnologie oder von einer Lotsorte auf eine andere Lotsorte umgestellt werden kann, und die auf einfache Weise an wechselnde Bedürfnisse des Kunden angepasst werden kann.

### Kurze Beschreibung der Erfindung

Die Lötanlage gemäss der Erfindung ist im Anspruch 1 definiert. Die Lötanlage ist bevorzugt aus Modulen zusammengesetzt, die in Transportrichtung hintereinander angeordnet und lösbar miteinander verbunden sind. Die Lötanlage umfasst mindestens ein Lötmodul mit einer Lötstation, die zum Wellenlöten, Reflow-Löten, Dampfphasenlöten oder Selektiv-Löten ausgebildet ist. Falls das Lötmodul zum Dampfphasenlöten oder Selektiv-Löten ausgebildet ist, dann ist die Lötstation ein fester Bestandteil des Lötmoduls. Falls das Lötmodul zum Wellenlöten und/oder Reflow-Löten ausgebildet ist, dann ist die Lötstation auswechselbar im Lötmodul einsetzbar. Die Lötstation ist in diesem Fall also mobil, sie ist z.B. auf Rädern oder Rollen gelagert. Die Lötstation wird mit verschiedenen Gütern wie elektrischer Energie, Daten und Steuerbefehlen, etc. versorgt, und von Gütern wie Abwärme, verunreinigter Luft, etc. entsorgt. Die Lötstation und das Lötmodul sind mit Mitteln für die gegenseitige Ausrichtung und mit zueinander passenden weiblichen bzw. männlichen Steckern ausgerüstet, wobei die Stecker Leitungen für die Güter abschliessen. Beim Einsetzen der Lötstation im Lötmodul richten die genannten Mittel die Lötstation bezüglich des Lötmoduls aus.

Die Lötanlage enthält bevorzugt ein Wellen-Lötmodul. Damit die Lötanlage auch andere Lötverfahren wie Reflow-Löten, Dampfphasenlöten oder Selektiv-Löten durchführen kann, kann sie mit entsprechenden Lötmodulen erweitert werden. Ein Lötmodul zum Reflow-Löten, Dampfphasenlöten oder Selektiv-Löten kann zum Beispiel unmittelbar nach dem Wellen-Lötmodul in die Lötanlage eingebaut werden. Eine solche Lötanlage kann also z.B. einige Bauteile einer Leiterplatte wellenlöten und andere Bauteile der Leiterplatte nach einem anderen Verfahren löten.

Falls die Lötanlage ein Lötmodul zum Wellenlöten aufweist, dann ist zudem eine separate Stand-by Station für die Aufnahme einer Lötstation vorgesehen, wobei die Stand-by Station in gleicher Weise wie das Wellen-Lötmodul mit Mitteln für die Ausrichtung der Lötstation und mit zu den Steckern der Lötstation passenden Steckern ausgerüstet ist, so dass die Lötstation beim Einsetzen in der Stand-by Station automatisch ausgerichtet wird. Die männlichen und weiblichen Stecker werden entweder von Hand zusammengesteckt oder die männlichen Stecker stecken sich sowohl beim Lötmodul als auch bei der Stand-by Station selbsttätig in die weiblichen Stecker ein.

Beim Wellenlöten wird das flüssige Lot durch eine Düse gefördert, wobei eine Hohl-Lotwelle entsteht. Um die Breite der Hohl-Lotwelle an wechselnde Bedürfnisse anpassen zu können, sind einerseits nebeneinander angeordnete Abdeckplatten vorhanden, die programmgesteuert einen Teil der Hohl-Lotwelle abdecken oder freigeben können. Andererseits ist die Wellen-Lötstation so konstruiert, dass die Düse auf einfache Weise auswechselbar ist, um die Arbeit mit einem Satz Düsen unterschiedlicher Breiten zu ermöglichen.

Die Module entsprechen den einzelnen Arbeitsschritten der Lötanlage. Beispiele für Module sind Fluxer, Vorwärmmodul, Abkühlungsmodul, Belademodul, Entlademodul, sowie die oben erwähnten verschiedenen Lötmodule. Die Module arbeiten autonom, aber gesteuert von einer zentralen Steuereinrichtung. Jedes Modul enthält ein eigenes (herkömmliches) Transportsystem für den Transport der Leiterplatten. Die Module sind mit aufeinander abgestimmten Mitteln für die gegenseitige Ausrichtung und mit zueinander passenden weiblichen und männlichen Steckern ausgerüstet, wobei die Stecker Leitungen für die Güter abschliessen. Beim Zusammenbau richten die genannten Mittel benachbarte Module aus und die männlichen Stecker stecken sich - bevorzugt - selbsttätig in die weiblichen Stecker ein oder sie werden von Hand zusammengesteckt. Dieses Konzept ermöglicht die flexible Anpassung der Lötanlage an wechselnde oder wachsende Bedürfnisse. Als Mittel für die gegenseitige Ausrichtung der Module eignen sich alle Arten von selbstzentrierenden Schnellverschlüssen, z.B. Zentrierbolzen und dazu passende Zentrieröffnungen, Schwalbenschwanzverbindungen, Präzisionsführungen, etc.

Grundsätzlich enthält jedes Modul einen eigenen Modulrechner (eigene Intelligenz), der mit einem übergeordneten Rechner kommuniziert. Beim Wellen-Lötmodul befindet sich der Modulrechner in der Lötstation.

Die Module sind kompakt gebaut und wärmemässig sehr gut isoliert, damit der Energieverlust durch Verlust an Wärme minimal ist. Die kompakte Bauweise ermöglicht es, die Module lösbar und freischwebend an Trägem zu befestigen.

Bevorzugt sind die Module mit einem zweiten Transportsystem ausgerüstet, das den Rücktransport der Rahmen mit oder ohne die gelöteten Leiterplatten ermöglicht. Dieses zweite Transportsystem ist unterhalb der Module und ausserhalb von deren Verschalung angeordnet.

Mit Vorteil ist in Transportrichtung gesehen vor dem Lötmodul ein Vorwärmmodul angeordnet und ein Kreislauf gebildet, um die im Lötmodul entstehende Abwärme dem Vorwärmmodul zuzuführen.

Die erfindungsgemässe Lötanlage bietet mehrere Vorteile:
- Die Lötanlage ist SMEP (single minute exchange of preparation) fähig, da die Lötstation auf einfache Weise auswechselbar ist.
- Die Lötanlage kann innert kurzer Zeit, typischerweise innerhalb weniger Minuten, von einer Löttechnologie auf eine andere Löttechnologie oder von einer Lotsorte auf eine andere Lotsorte umgestellt werden.
- Die Lötanlage kann jederzeit mit zusätzlichen Modulen erweitert werden und damit die Leistung bzw. der Durchsatz an wechselnde oder wachsende Bedürfnisse angepasst werden. So kann die Lötanlage beispielsweise problemlos mit mehr als einem Fluxer oder mehreren Vorwärmmodulen ausgerüstet werden, um den Durchsatz der Fluxer und/oder der Vorwärmmodule an den Durchsatz der Lötstation anzupassen.
- Die Breite der Hohl-Lotwelle kann durch ein Masken- oder Blendensystem schnell und einfach verstellt werden.
- Die freischwebende Anordnung der Module ist servicefreundlich.
- Weil jedes Modul ein eigenes Transportsystem mit einem eigenen Antrieb aufweist, ist die Geschwindigkeit der Leiterplatte in jedem Modul individuell einstellbar. Dieses Konzept ermöglicht eine bauteilschonende Betriebsweise. Im Wellen-Lötmodul soll die Transportgeschwindigkeit relativ gross sein, damit der Kontakt der Leiterplatte mit der flüssigen Hohl-Lotwelle möglichst kurz ist. Falls nur ein einziges Vorwärmmodul vorhanden ist, dann soll die Transportgeschwindigkeit im Vorwärmmodul kleiner als im Lötmodul sein, damit die Erwärmung der Leiterplatte langsam und gleichmässig erfolgt.
- Die modulare Bauweise erlaubt den nachträglichen Einbau von zusätzlichen Vorwärmmodulen, so dass die Transportgeschwindigkeit in den Vorwärmmodulen dem Durchsatz des Lötmoduls angepasst und damit der Durchsatz erhöht werden kann.
Eine Stand-by-Station ist im Anspruch 9 definiert.

Die Erfindung wird nachfolgend anhand eines Ausführungsbeispiels und anhand der Zeichnung näher erläutert.

### Beschreibung der Figuren

- Fig. 1: zeigt in perspektivischer Ansicht eine modular aufgebaute Lötanlage,
- Fig. 2: zeigt in perspektivischer Ansicht eine Lötstation,
- Fig. 3: zeigt in seitlicher Ansicht eine Stand-by Station für die Aufnahme einer Lötstation und eine noch nicht eingesetzte Lötstation, und
- Fig. 4: zeigt in Aufsicht ein Chassis eines Moduls.
- Fig. 5, 6: zeigen einen Verstellmechanismus, und
- Fig. 7: zeigt drei Module der Lötanlage.

### Detaillierte Beschreibung der Erfindung

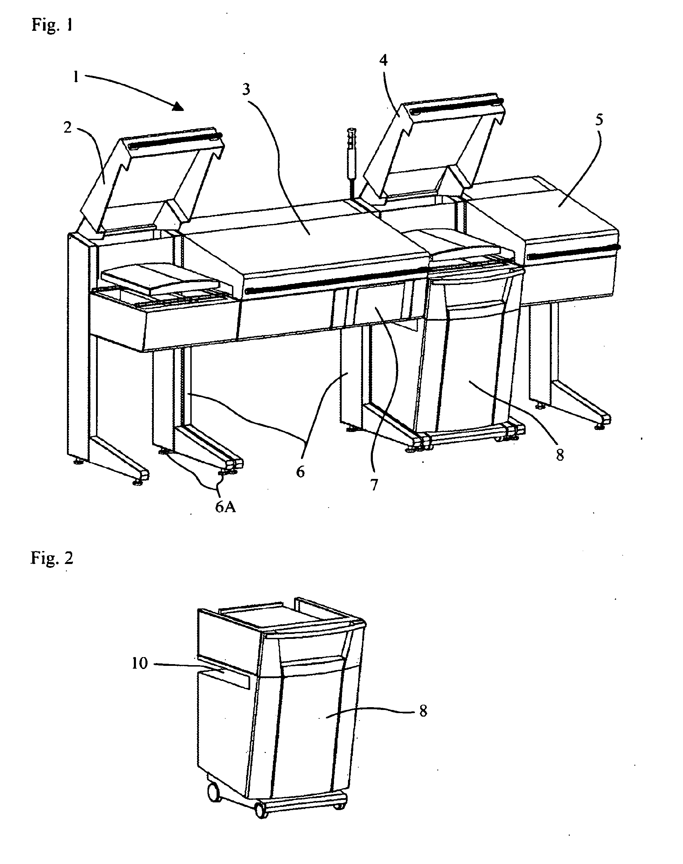

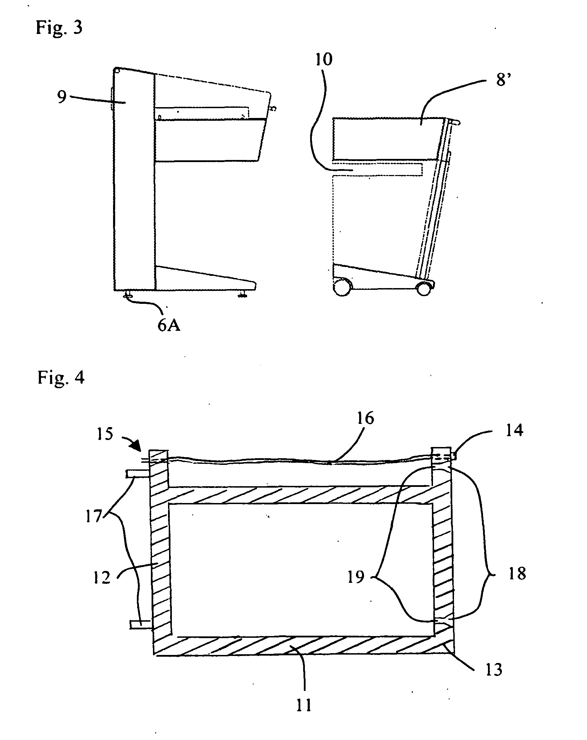

Die Fig. 1 zeigt in perspektivischer Ansicht eine modular aufgebaute Lötanlage 1 zum Löten von Bauteilen, die auf einer Leiterplatte montiert sind. Die Leiterplatten sind in einen Rahmen eingelegt und werden in einer vorbestimmten Transportrichtung durch die Lötanlage transportiert. Die Lötanlage 1 besteht aus mehreren Modulen, die in Transportrichtung hintereinander angeordnet und lösbar miteinander verbunden sind. Die im Beispiel gezeigte Lötanlage umfasst folgende Module: ein in der Fachwelt als Fluxer bezeichnetes Modul 2 zum Auftragen von Flussmittel auf die Leiterplatte, ein Vorwärmmodul 3, ein Lötmodul 4 zum Wellenlöten und ein Abkühlungsmodul 5. Jedes Modul enthält ein als tragendes Element ausgebildetes Chassis, an dem ein Gehäuse befestigt ist, das wie üblich eine Vorderseite, eine Rückseite, eine linke und eine rechte Seitenwand, einen Boden und einen Deckel aufweist. Der Deckel ist aufklappbar und bevorzugt aus durchsichtigem Material wie beispielsweise Glas. Die Chassis der Module sind an Trägem 6 befestigt oder angehängt. Die Träger 6 sind vorzugsweise wie dargestellt L-förmig. Die Module sind also freischwebend. Die Träger 6 sind mit in der Höhe verstellbaren Füssen 6A ausgestattet, die es ermöglichen, die Module zu nivellieren. Eine Lötstation 8 ist auswechselbar im Lötmodul 4 einsetzbar. Die Module werden von einem zentralen, ausklappbaren Steuerpult 7 oder von einem externen Rechner gesteuert, wobei in der Regel jedes Modul, mit Ausnahme des Lötmoduls 4, über eigene Intelligenz, z.B. einen eigenen Mikroprozessor, verfügt. Wenn das Lötmodul keine eigene Intelligenz hat, verfügt die Lötstation 8 über eine eigene Intelligenz. Die Lötanlage 1 umfasst weiter eine separate Stand-by Station 9 (Fig. 3), die keine eigene Intelligenz aufweist. Jedes Modul ist mit einem eigenen Transportsystem für den Transport der Rahmen mit den Leiterplatten durch das Modul hindurch ausgestattet. Der Zugang zur Lötanlage erfolgt von der Vorderseite.

Die Fig. 2 zeigt in perspektivischer Ansicht die aus der Lötanlage 1 herausgenommene Lötstation 8. Die Fig. 3 zeigt in seitlicher Ansicht die Stand-by Station 9 und eine weitere, noch nicht eingesetzte Lötstation 8'. Die Module der Lötanlage 1 enthalten bevorzugt ein zweites Transportsystem für den Rücktransport der Rahmen bzw. der Rahmen mit den gelöteten Leiterplatten. Die Lötstation 8 enthält deshalb einen Schlitz 10, in dem das zweite Transportsystem des Lötmoduls 4 Platz findet, wenn die Lötstation 8 im Lötmodul 4 der Lötanlage 1 eingesetzt ist.

Die Module müssen mit verschiedenen Gütern wie zum Beispiel elektrischer Energie, Druckluft, flüssigem Stickstoff, einem Bus für den Austausch von Daten und Steuerbefehlen (z.B. einem CAN Bus), usw. versorgt und von Abluft entsorgt werden. Im folgenden werden sowohl die Versorgungsgüter als auch die Entsorgungsgüter als Güter bezeichnet. Die Module sind deshalb mit einem Versorgungskanal versehen, der bevorzugt entlang der Rückseite der Module verläuft. Der Versorgungskanal enthält Leitungen für die genannten Güter. Jede Leitung hat ein erstes Ende, das mit einem männlichen Stecker versehen ist, und ein zweites Ende, das mit einem weiblichen Stecker versehen ist. Unter dem Begriff Stecker sind nicht nur elektrische Stecker, sondern auch Kopplungsteile für Gase und Flüssigkeiten zu verstehen. Sofern das Modul ein Gut benötigt, enthält die entsprechende Leitung eine Abzweigung. Die Stecker, die an eine Gasleitung oder Flüssigkeitsleitung angeschlossen sind, sind bevorzugt so ausgebildet, dass sie die Leitung automatisch verschliessen, wenn kein Gegenstecker eingesteckt ist.

Die Module sind bevorzugt so eingerichtet, dass die Leitungen benachbarter Module beim Zusammenbau automatisch miteinander verbunden werden. Ein einfaches Ausführungsbeispiel wird anhand der Fig. 4 erläutert, die in Aufsicht das Chassis 11 eines Moduls zeigt. Bei diesem Ausführungsbeispiel ist das Chassis 11 ein aus vier Trägerbalken gebildeter Rahmen. Die Stecker sind an den seitlichen Trägerbalken 12, 13 des Chassis 11 angeordnet, wobei beispielsweise der männliche Stecker 15 eines Guts auf dem linken Trägerbalken 12 und der weibliche Stecker 14 dieses Guts auf dem rechten Trägerbalken 13 angeordnet ist, oder umgekehrt. In der Fig. 4 ist nur eine einzige Versorgungsleitung 16, nämlich ein stromleitendes Kabel, dargestellt, dessen Enden mit dem männlichen elektrischen Stecker 14 und dem weiblichen elektrischen Stecker 15 abgeschlossen sind. Das Chassis 11 ist zudem mit Mitteln für die gegenseitige Ausrichtung der Module ausgebildet: Im Beispiel enthält der linke Trägerbalken 12 zwei im Abstand zueinander angeordnete Zentrierbolzen 17 und der rechte Trägerbalken 13 zwei entsprechend angeordnete Zentrieröffnungen 18. Die Zentrieröffnungen 18 sind bevorzugt konisch ausgebildet und gehen in eine Bohrung 19 mit dem Durchmesser der Zentrierbolzen 17 über.

Der Zusammenbau von zwei Modulen ist sehr einfach. Die Seitenwände von benachbarten Modulen sind überflüssig und werden entfernt (oder nicht mitgeliefert). Die Module werden dann zueinander geschoben, so dass in einem ersten Schritt die Zentrierbolzen 17 des einen Moduls in die entsprechenden Zentrieröffnungen 18 des anderen Moduls eingreifen. Die Module werden auf diese Weise automatisch richtig zueinander ausgerichtet und zentriert. Sobald die Zentrierbolzen 17 in die Bohrung 19 der zugeordneten Zentrieröffnung 18 hineinragen, sind die beiden Module gegenseitig ausgerichtet und es können in einem zweiten Schritt die beiden Module ganz zusammengeschoben werden. Dabei stecken sich die männlichen Stecker 14 in die weiblichen Stecker 15 ein. Die Stecker 15, 14 sind mit einem gewissen Spiel an den Chassis 11 der Module befestigt, so dass automatisch einwandfreie Steckverbindungen entstehen. Anschliessend werden die Chassis 11 an den Trägern 6 befestigt oder in diese eingehängt.

Die Lötstation 8 und das Lötmodul 4 bilden zusammen das Kernstück der Lötanlage 1. Die Lötstation 8 ist eine Station zum Wellenlöten.

Die Lötstation 8 wird typischerweise auf die gleiche Art und Weise mit dem Lötmodul 4 verbunden, wie zwei benachbarte Module beim Zusammenbau der Lötanlage 1 verbunden werden. Damit dies möglich ist, ist die Lötstation 8 mit Zentrierbolzen versehen, die in entsprechende Zentrieröffnungen im Chassis des Lötmoduls 4 eingreifen (oder umgekehrt). Des weiteren ist die Lötstation 8 mit männlichen Steckern versehen, die in passende weibliche Stecker des Lötmoduls 4 eingreifen (oder umgekehrt). Beim Einfahren der Lötstation 8 in das Lötmodul 4 fahren zuerst die Zentrierbolzen in die zugeordneten Gentrieröffnungen ein und richten die Lötstation 8 in Bezug auf das Lötmodul 4 aus. Anschliessend greifen beim weiteren Einfahren die männlichen Stecker in die weiblichen Stecker ein. Sobald die Lötstation 8 vollständig eingeschoben und im Lötmodul 4 verriegelt ist, ist die Lötanlage 1 wieder betriebsbereit.

Anstelle der Zentrierbolzen und der Zentrieröffnungen können die Träger 6 des Lötmoduls 4 Führungsschienen für die Lötstation 8 enthalten, die in der Ebene (Höhe und Winkel) verstellbar sind, und die Lötstation entsprechende Gegenteile, so dass die Lötstation 8 beim Einfahren in das Lötmodul 4 automatisch ausgerichtet wird.

Obwohl eine Lötstation 8 eine Station zum Wellenlöten sein kann, verläuft die Transportrichtung der Rahmen mit den Leiterplatten horizontal und nicht unter dem sonst üblichen Winkel von mindestens 7°. Nur so kann die Lötanlage 1 sowohl zum Wellenlöten als auch zum Reflow-Löten benützt werden.

Die Stand-by Station 9 dient dazu, eine zweite Lötstation 8' für den Betrieb in der Lötanlage 1 vorzubereiten, wenn in der Lötanlage 1 bereits eine erste Lötstation 8 im Einsatz ist. Die Stand-by Station 9 ist ähnlich wie das Lötmodul 4 eingerichtet. Die Stand-by Station 9 ist mit allen notwendigen Anschlüssen (in Form von im Beispiel weiblichen Steckern) eingerichtet, über die die notwendigen Güter wie elektrische Energie, Bus für den Austausch von Daten und Steuerbefehlen, Abführung von heisser Luft, etc. zugeführt oder abgeführt werden, die für die Vorbereitung der zweiten Lötstation 8' nötig sind. Dieses Ivonzept, das auf beweglichen Lötstationen 8, 8' und der Stand-by Station 9 oder auch mehreren Stand-by Stationen basiert, ermöglicht es, die Lötanlage 1 mit verschiedenen Löttechnologien zu betreiben, wobei der Wechsel von einer Löttechnologie zu einer anderen Löttechnologie oder vom Löten mit einer Lotsorte, z.B. bleihaltigem Lot, zum Löten mit einer anderen Lotsorte, z.B. bleifreiem Lot, innert weniger Minuten und mit einfachen Handgriffen vollzogen werden kann.

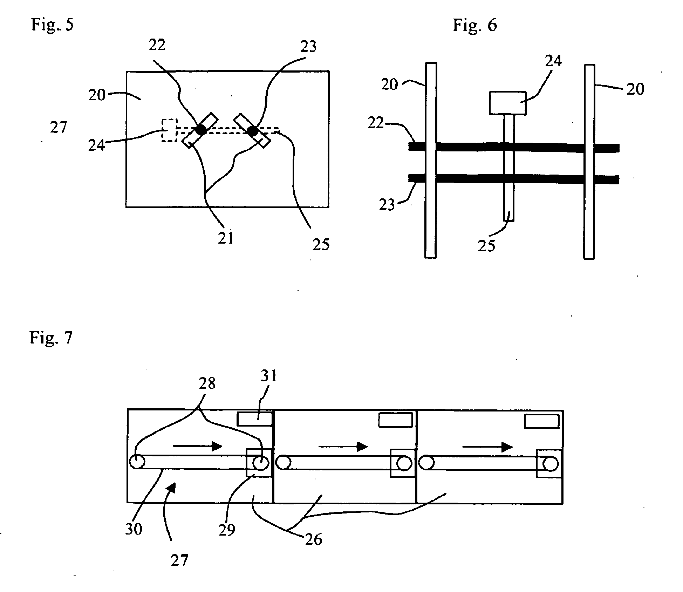

Die Lötstation 8 dient zum Wellenlöten. Sie umfasst einen Behälter für die Aufnahme des flüssigen Lots, eine Lotpumpe, um das flüssige Lot durch die in den Düse zu befördern und so die flüssige Hohl-Lotwelle zu bilden, sowie eine Drahtzuführeinheit, um neues Lot in fester Form zuzuführen. Das Lot ist als Draht auf eine Drahtrolle aufgewickelt. Um das flüssige Lot vor Oxidation zu schützen, wird entweder die Oberfläche des Lots mit einem flüssigen Medium bedeckt oder eine Stickstoffatmosphäre aufgebaut. Im ersten Fall enthält die Lötstation zusätzlich eine Wanne und eine Pumpe für das flüssige Medium, einen Ablass und ein Schmutzauffangbecken. Im zweiten Fall enthält die Lötstation eine Schutzhaube und einen Dosierautomaten für die dosierte Zuführung von Stickstoff. Um einwandfreie Lötverbindungen zu erhalten, muss die Höhe der Hohl-Lotwelle genau eingestellt werden können. Die erfindungsgemässe Lötstation enthält einen mechanischen Verstellmechanismus, der es ermöglicht, die Höhe der Lotpumpe mechanisch zu verstellen. Zudem kann die Förderleistung der Lotpumpe elektrisch gesteuert und damit die Höhe der Hohl-Lotwelle verstellt werden. Eine besonders vorteilhafte Ausführung des mechanischen Verstellmechanismus ist in den Fig. 5 und 6 dargestellt. Zwei im Abstand zueinander und parallel zu den Seitenwänden der Lötstation 8 verlaufende Platten 20, die im Inneren der Lötstation 8 angebracht sind, enthalten je zwei schräg zueinander verlaufende Schlitze 21, in die parallel zueinander verlaufende Stangen 22, 23 eingreifen. Die Fig. 5 zeigt in seitlicher Ansicht eine solche Platte 20. Die Fig. 6 zeigt den Verstellmechanismus in Aufsicht. Die Stangen 22, 23 enthalten je eine Bohrung mit einem Gewinde. Das Gewinde der einen Stange 22 ist rechts drehend, das Gewinde der anderen Stange 23 ist links drehend. Eine von einem Motor 24 angetriebene Spindel 25 ist in die beiden Gewinde hineingeschraubt. Wenn der Motor die Spindel dreht, dann ändert sich der Abstand der beiden Stangen. Weil die Stangen in den schräg nach oben verlaufenden Schlitzen geführt sind, ändert sich die Höhe der Stangen. Die Stangen tragen eine Plattform, auf der der Lotbehälter und die Lotpumpe angeordnet sind.

Das Lötmodul 4 enthält weiter einen Verriegelungsmechanismus, vorzugsweise einen am Chassis befestigten, programmgesteuert betätigbaren Haken, um die Lötstation 8 im Lötmodul 4 verriegeln zu können. Für den Produktionsbetrieb wird auch der Deckel geschlossen und verriegelt. Auf diese Weise wird verhindert, dass bei fehlerhafter oder unsachgemässer Bedienung flüssiges Lot auf eine Bedienperson gelangen könnte. Zudem sorgt z.B. ein Zeitschalter dafür, dass die Verriegelung des Deckels und des Hakens erst dann freigegeben wird, wenn die Oberfläche des Lots genügend abgekühlt und wieder erstarrt ist.

Beim Löten entsteht im Lötmodul 4 Abwärme, die abgeführt werden muss. Um die Oxidation des Lots zu vermeiden, ist wie vorhin erwähnt entweder das Lot mit einem flüssigen Medium bedeckt oder das Löten findet unter einer Schutzgasatmosphäre statt. Als Schutzgas dient in der Regel Stickstoff. Der Stickstoff wird in flüssiger Form zugeführt und im Lötmodul 4 verdampft. Die im Lötmodul entstehende Abwärme wird mit Vorteil im Vorwärmmodul 3 genutzt. Bei einer ersten Variante ist ein einziger Kreislauf vorgesehenen. Die Luft bzw. das Schutzgas im Lötmodul 4 wird von einem Lüfter angesaugt und durch einen Filter ins Vorwärmmodul 3 geführt, wo sie sich abkühlt, und dann wieder zurück ins Lötmodul 4 geführt. Bei einer zweiten Variante sind ein primärer und ein sekundärer Kreislauf vorgesehen. Die heisse Luft bzw. das Schutzgas im Lötmodul 4 wird von einem Lüfter angesaugt, über den primären Kreislauf einem Wärmetauscher zugeführt und ins Lötmodul 4 zurückgeführt. Der Wärmetauscher gibt die Wärme an den sekundären Kreislauf ab, der durch das Vorwärmmodul 3 führt. Die Verbindung der entsprechenden Leitungen zwischen dem Vorwärmmodul 3 und dem Lötmodul 4 erfolgt wie oben beschrieben über entsprechende Stecker, die die Steckverbindung beim Zusammenbau der Module herstellen.

Die Lötanlage 1 kann mit weiteren Modulen, z.B. einem Belademodul und einem Entlademodul, ausgerüstet werden. Zudem kann durch Aneinanderreihen von mehreren Vorwärmmodulen die Strecke und damit die Zeit verlängert werden, während der die Leiterplatten aufgewärmt werden. Zudem können die Belade- und die Entladestation mit einem Roboter oder Handler ausgerüstet werden, um die Beladung mit Rahmen und Leiterplatten zu automatisieren.

Wie bereits erwähnt, enthält jedes Modul der Lötanlage ein eigenes Transportsystem für den Transport der Rahmen mit den Leiterplatten. Die Fig. 7 zeigt in Ansicht von vorne drei nebeneinander liegende Module 26 der Lötanlage 1, auch wenn die Lötanlage 1 in der Regel mehr als drei Module 26 aufweist. Der Pfeil zeigt die Transportrichtung der Leiterplatten. Die Transportsysteme 27 der Module 26 sind identisch. Ein solches Transportsystem 27 umfasst z.B. zwei um horizontal verlaufende Achsen drehende Rollen 28, von denen eine von einem Motor 29 angetrieben wird, und ein Endlos-Förderband 30. Die Intelligenz 31 (oder Steuereinheit) des Moduls 26 steuert die Geschwindigkeit des zugehörigen Motors 29 entsprechend den von der übergeordneten Steuerung gemachten Vorgaben. Weil jedes Modul 26 ein eigenes Transportsystem 27 für den Transport der Leiterplatten enthält, kann die Transportgeschwindigkeit in jedem Modul 26 individuell eingestellt werden. Die übergeordnete Steuerung sorgt dafür, dass die Leiterplatten trotzdem ohne Stau durch die Lötanlage 1 transportiert werden.

Jedes Modul kann bei Bedarf mit einem zweiten solchen Transportsystem ausgerüstet werden, um die Leiterplatten nach dem Löten in die Gegenrichtung zu transportieren.

Es ist auch möglich, die Module 26 mit Transportsystemen auszurüsten, bei denen die beiden Rollen 28 um vertikale Achsen drehen und bei denen anstelle des Förderbandes eine Kette mit Fingern vorhanden ist, wobei die Rahmen mit den Leiterplatten auf den Fingern aufliegen.

Zwar werden hier zu illustrativen Zwecken gegenwärtig bevorzugte Ausführungsbeispiele und Anwendungen dieser Erfindung dargestellt und beschrieben, doch es sind zahlreiche Variationen und Modifikationen möglich, die innerhalb des Konzepts und des Geltungsbereichs dieser Erfindung bleiben. Somit ist die Erfindung ausschließlich durch die angehängten Patentansprüche beschränkt.

## Patentansprüche

1. Lötanlage (1) zum Wellenlöten und/oder Reflow-Löten und/oder Dampfphasenlöten und/oder Selektiv-Löten von Bauteilen, die auf einer Leiterplatte montiert sind, wobei die Leiterplatten in Rahmen gelegt in einer vorbestimmten Transportrichtung durch die Lötanlage (1) an einer Lötstation (8) vorbei transportierbar sind, wobei die Lötstation (8) über Versorgungsleitungen mit verschiedenen Gütern versorgt wird, **dadurch gekennzeichnet, dass**
- die Lötanlage (1) ein Lötmodul (4) aufweist,
- die Lötstation (8) mobil, auswechselbar im Lötmodul (4) einsetzbar und zum Wechseln von einer Löttechnologie zu einer anderen Löttechnologie oder vom Löten mit einer Lotsorte zum Löten mit einer anderen Lotsorte herausnehmenbar von der Lötanlage (1) lösbar ist,
- die Lötstation (8) und das Lötmodul (4) mit Mitteln für die gegenseitige Ausrichtung und mit zueinander passenden weiblichen bzw. männlichen Steckern (15, 14) ausgerüstet sind, die die Versorgungsleitungen abschliessen, und dass
- die genannte Transportrichtung der Rahmen horizontal verläuft.

2. Lötanlage nach Anspruch 1, **dadurch gekennzeichnet, dass** die Lötstation (8) eine auf Rädern oder Rollen gelagerte, auf dem Boden stehende Einheit ist.

3. Lötanlage nach Anspruch 1 oder 2, **dadurch gekennzeichnet, dass** die Lötstation (8) zum Wellenlöten ist und eine Lotpumpe und einen mechanischen Verstellmechanismus aufweist, der es ermöglicht, eine Höhe der Lotpumpe mechanisch zu verstellen.

4. Lötanlage nach einem der Ansprüche 1 bis 3, **dadurch gekennzeichnet, dass** beim Einfahren der Lötstation (8) in das Lötmodul (4) die männlichen Stecker in die weiblichen Stecker eingreifen.

5. Lötanlage nach einem der Ansprüche 1 bis 4, **dadurch gekennzeichnet, dass** die Lötanlage (1) aus Modulen zusammengesetzt ist, die in Transportrichtung hintereinander angeordnet und lösbar miteinander verbunden sind, dass jedes Modul ein eigenes Transportsystem für den Transport der Leiterplatten aufweist und dass die Transportgeschwindigkeit jedes Moduls individuell einstellbar ist.

6. Lötanlage nach Anspruch 5, **dadurch gekennzeichnet, dass** jedes Modul ein eigenes Gehäuse aufweist.

7. Lötanlage nach Anspruch 5 oder 6, **dadurch gekennzeichnet, dass** die Module lösbar und freischwebend an Trägern (6) befestigt sind.

8. Lötanlage nach einem der Ansprüche 5 bis 7, **dadurch gekennzeichnet, dass** jedes Modul ein zweites Transportsystem für den Rücktransport der Rahmen aufweist und dass die Lötstation einen Schlitz (10) aufweist, in dem das zweite Transportsystem des Lötmoduls Platz findet, wenn die Lötstation im Lötmodul eingesetzt ist.

9. Stand-by Station (9) für eine Lötanlage (1) mit einer Lötstation (8; 8') nach einem der Ansprüche 1 bis 8, wobei die Stand-by Station (9) eine separate Station mit mehreren Anschlüssen ist, über die die notwendigen Güter, wie elektrische Energie, Bus für den Austausch von Daten und Steuerbefehlen, Abführung von heißer Luft, ... zugeführt oder abgeführt werden, die für die Vorbereitung des Betriebs der Lötstation (8; 8') in einer Lötanlage (1) nötig sind, **dadurch gekennzeichnet, dass** die Stand-by Station (9) und die Lötstation (8) mit aufeinander abgestimmten Mitteln für die gegenseitige Ausrichtung und mit zueinander passenden weiblichen und männlichen Steckern ausgerüstet sind, und dass die genannten Mittel die Lötstation (8) beim Einsetzen in der Stand-by Station (9) automatisch ausrichten.

## Claims

1. Soldering machine (1) for wave soldering and/or reflow soldering and/or vapor phase soldering and/or selective soldering of components which are mounted on a circuit board, the circuit boards, laid in frames, being transportable in a predetermined transport direction through the soldering machine (1) past a soldering station (8), and the soldering station (8) being supplied with various goods via supply lines, **characterized in that**
- the soldering machine (1) comprises a soldering module (4),
- the soldering station (8) is mobile, exchangeably insertable in the soldering module (4) and removably detachable from the soldering machine (1) for changing over from one soldering technology to another soldering technology or from soldering with one type of solder to another type of solder,
- the soldering station (8) and the soldering module (4) are equipped with means for mutual alignment and with female or male plugs (15, 14), which fit with one another and which terminate the supply lines, and
- said transport direction of the frames runs horizontally.

2. Soldering machine according to claim 1, **characterized in that** the soldering station (8) is a floor standing unit mounted on wheels or rollers.

3. Soldering machine according to claim 1 or 2, **characterized in that** the soldering station (8) is for wave soldering and comprises a solder pump and a mechanical adjustment mechanism allowing to mechanically adjust a height of the solder pump.

4. Soldering machine according to any of claims 1 to 3, **characterized in that** on inserting the soldering station (8) in the soldering module (4) the male plugs plug into the female plugs.

5. Soldering machine according to any of claims 1 to 4, **characterized in that** the soldering machine (1) is assembled from modules which are situated one behind another in the transport direction and which are removably connected to one another, that each module has a separate transport system for the transport of the circuit boards and that the transport velocity of each module is individually settable.

6. Soldering machine according to claim 5, **characterized in that** each module has a separate housing.

7. Soldering machine according to claim 5 or 6, **characterized in that** the modules are fastened removably and free-floating on supports (6).

8. Soldering machine according to any of claims 5 to 7, **characterized in that** each module has a second transport system for the return transport of the frames, and that the soldering station (8) has a slot (10), in which the second transport system of the soldering module is located when the soldering station is inserted in the soldering module.

9. Standby station (9) for a soldering machine (1) having a soldering station (8;8') according to any of claims 1 to 7, wherein the standby station (9) is a separate station with several terminals, via which the required goods, like electical power, bus for the exchange of data and control commands, disposal of hot air,... are supplied or removed that are necessary for the preparation of the operation of the soldering station (8; 8') in a soldering machine (1), **characterized in that** the standby station (9) and the soldering station (8) are equipped with means adapted to one another for the mutual alignment and with female and male plugs, which fit with one another, and that said means automatically align the soldering station (8) upon insertion in the standby station (9).

## Revendications

1. Installation de brasage (1) pour le brasage aux ondes et/ou pour le brasage Reflow et/ou pour le brasage par phases de vapeur et/ou pour le brasage sélectif des composants qui sont montés sur une carte de circuits imprimés, dans laquelle les cartes de circuits imprimés placées dans des cadres peuvent être transportées dans une direction de transport prédéterminée à travers une station de brasage (8) et dans laquelle la station de brasage (8) est alimentée avec diverses matières au moyen de conduites d'alimentation, **caractérisée en ce que** :
- l'installation de brasage (1) présente un module de brasage (4),
- la station de brasage (8) est mobile, peut être mise en place dans le module de brasage (4) avec possibilité de remplacement et peut être séparée de l'installation de brasage (1) par enlèvement pour changer d'une technologie de brasage sur une autre technologie de brasage ou pour le brasage avec une sorte de métal d'apport pour le brasage avec une autre sorte de métal d'apport,
- la station de brasage (8) et le module de brasage (4) sont équipés de moyens pour l'orientation réciproque et de connecteurs femelles ou mâles (15, 14) qui sont adaptés les uns aux autres et qui obturent les conduites d'alimentation, et **en ce que**
- la direction de transport mentionnée des cadres s'étend à l'horizontale.

2. Installation de brasage selon la revendication 1, **caractérisée en ce que** la station de brasage (8) est une unité qui est montée sur des roues ou sur des roulettes et qui est posée sur le sol.

3. Installation de brasage selon la revendication 1 ou 2, **caractérisée en ce que** la station de brasage (8) est destinée au brasage aux ondes et présente une pompe de métal d'apport et un mécansime de réglage mécanique qui permet de régler mécaniquement une hauteur de la pompe de métal d'apport.

4. Installation de brasage selon l'une des revendications 1 à 3, **caractérisée en ce que** lors de la rentrée de la station de brasage (8) dans le module de brasage (4), les connecteurs mâles s'engagent dans les connecteurs femelles.

5. Installation de brasage selon l'une des revendications 1 à 4, **caractérisée en ce que** l'installation de brasage (1) est constituée de modules qui sont agencés l'un derrière l'autre dans la direction de transport et qui sont reliés les uns aux autres de manière séparable, de telle sorte que chaque module présente un propre système de transport pour le transport des cartes de circuits imprimés et **en ce que** la vitesse de transport de chaque module peut être ajustée individuellement.

6. Installation de brasage selon la revendication 5, **caractérisée en ce que** chaque module présente un propre boîtier.

7. Installation de brasage selon l'une ou l'autre des revendications 5 et 6, **caractérisée en ce que** les modules sont fixés sur des supports (6) avec possibilité d'enlèvement et d'une manière suspendue librement.

8. Installation de brasage selon l'une des revendications 5 à 7, **caractérisée en ce que** chaque module présente un second système de transport pour le transport de retour des cadres et **en ce que** la station de brasage présente une fente (10) dans laquelle le second système de transport du module de brasage trouve de la place lorsque la station de brasage est mise en place dans le module de brasage.

9. Station de stand-by (9) pour une installation de brasage (1) comprenant une station de brasage (8; 8') selon l'une des revendications 1 à 8, dans laquelle la station de stand-by (9) est une station séparée munie de plusieurs raccords au moyen desquels il est possible d'apporter ou d'évacuer les matières nécessaires telles que l'énergie électrique, le bus pour le remplacement des données et des instructions de commande, l'évacuation de l'air très chaud,... lesquelles sont nécessaires à la préparation du fonctionnement de la station de brasage (8; 8') dans une installation de brasage (1), **caractérisée en ce que** la station de stand-by (9) et la station de brasage (8) sont équipées de moyens accordés les uns aux autres pour l'orientation réciproque ainsi que de connecteurs mâles et femelles adaptés les uns aux autres, et dans laquelle les moyens mentionnés orientent automatiquement la station de brasage (8) lors de la mise en place dans la station de stand-by (9).
